# EUROPÄISCHE PATENTSCHRIFT

(11) **EP 2 495 451 B1**
(45) Veröffentlichungstag und Bekanntmachung des Hinweises auf die Patenterteilung: **15.05.2013**
(21) Anmeldenummer: 11001686.2
(22) Anmeldetag: 01.03.2011
(51) Int. Cl.: F15B 15/06

(54) **Fluidbetätigte Drehantriebsvorrichtung**
Fluid-actuated rotary drive
Dispositif d'entraînement rotatif hydraulique

(43) Veröffentlichungstag der Anmeldung: 05.09.2012
(73) Patentinhaber: FESTO AG & Co. KG, 73734 Esslingen (DE)
(72) Erfinder: Gückel, Jürgen, 70794 Filderstadt (DE); Diener, Ulrich, 73732 Esslingen (DE); Bitzer, Jörg, 73733 Esslingen (DE); Yigit, Hava, 73061 Ebersbach (DE)
(74) Vertreter: Abel, Martin

(56) Entgegenhaltungen:
- EP-A1- 2 093 432
- WO-A1-2004/111478
- US-A- 3 148 595

## Beschreibung

Die Erfindung betrifft eine fluidbetätigte Drehantriebsvorrichtung, mit einem sich längs einer Hauptachse erstreckenden Antriebsgehäuse, in dem zwei durch eine Zwischenwand voneinander getrennte längliche Räume mit zu der Hauptachse parallelen Längsachsen nebeneinander angeordnet sind, von denen mindestens einer einen Antriebsraum bildet, in dem eine durch gesteuerte Fluidbeaufschlagung linear verschiebbare ,Antriebseinheit angeordnet ist, die an ihrer der Zwischenwand zugewandten Längsseite eine Antriebsverzahnung aufweist, und mit einer um eine zu der Hauptachse rechtwinkelige Drehachse relativ zu dem Antriebsgehäuse drehbaren Abtriebseinheit, die einen im Innern des Antriebsgehäuses mit der Antriebsverzahnung der mindestens einen Antriebseinheit in Verzahnungseingriff stehenden Abtriebszahnkranz aufweist und die an einem sie umschließenden Lagerring drehbar gelagert ist, der mit einer Unterseite voraus im Bereich einer in Achsrichtung der Drehachse orientierten ersten Außenfläche des Antriebsgehäuses montiert und dabei mittels einer Schraubverbindung an dem Antriebsgehäuse befestigt ist, wobei der Lagerring ein bezüglich seines Zentrums konzentrisches Befestigungsgewinde aufweist und an dem Antriebsgehäuse ein zu dem Befestigungsgewinde komplementäres Gegengewinde angeordnet ist, wobei der Lagerring durch Ineinandereinschrauben des Befestigungsgewindes und des Gegengewindes mit dem Antriebsgehäuse verschraubt ist, wobei der Lagerring über einen das Befestigungsgewinde aufweisenden Gewindeabschnitt und über einen sich daran anschließenden, am Außenumfang gewindelosen Endabschnitt verfügt.

Eine aus der EP 2 093 432 A1 bekannte Drehantriebsvorrichtung ist mit einer zu einer Drehbewegung antreibbaren Abtriebseinheit ausgestattet, die unter Zwischenschaltung von Wälzlagermitteln an einem Lagerring drehbar gelagert ist, der seinerseits mit einer Unterseite voraus an eine erste Außenfläche eines Antriebsgehäuses der Drehantriebsvorrichtung angesetzt und durch eine Schraubverbindung an dem Antriebsgehäuse befestigt ist. Die Schraubverbindung ist mit Hilfe mehrerer Befestigungsschrauben realisiert, die ähnlich einer Flanschverbindung von der dem Antriebsgehäuse abgewandten Seite her in den Lagerring eingesteckt und in Gewindebohrungen eingeschraubt sind, die um die Abtriebseinheit herum im Antriebsgehäuse der Drehantriebsvorrichtung ausgebildet sind. Die Schraubenköpfe der Befestigungsschrauben sind versenkt in dem Lagerring aufgenommen, was den Nachteil mit sich bringt, dass der Ringkörper des Lagerringes relativ breit auszuführen ist. Dies steht einer Verringerung der Baugröße der Drehantriebsvorrichtung entgegen.

Um eine vergleichbare Situation handelt es sich bei einer aus der JP 2007127160 A bekannten Drehantriebsvorrichtung.

Eine aus der DE 19803819 B4 bekannte Drehantriebsvorrichtung enthält eine Abtriebseinheit, die ausschließlich durch zwei separate Wälzlager am Antriebsgehäuse gelagert ist, die im Innern des Antriebsgehäuses untergebracht sind. Diese Art der Lagerung ist zwar platzsparend, hat aber den Nachteil, dass die Lagereinrichtungen nur schwer zugänglich und nur mit größerem Aufwand montierbar und demontierbar sind.

Aus der US 3 148 595 A ist eine Drehantriebsvorrichtung der eingangs genannten Art bekannt, die eine Abtriebswelle aufweist, die in einem Lagerring drehbar gelagert ist. Der Lagerring ist mit einem Befestigungsgewinde versehen und in eine Aufnahmevertiefung eines Gehäuses der Drehantriebsvorrichtung eingeschraubt, wobei er vollständig in dieser Aufnahmevertiefung aufgenommen ist.

Der Erfindung liegt die Aufgabe zugrunde, eine Drehantriebsvorrichtung der eingangs genannten Art zu schaffen, deren Abtriebseinheit einfach und platzsparend drehgelagert ist.

Zur Lösung dieser Aufgabe ist erfindungsgemäß vorgesehen, dass der gewindelose Endabschnitt des Lagerrings ein sich in Richtung zu der der Unterseite des Lagerringes entgegengesetzten Oberseite hin an den Gewindeabschnitt anschließender oberer Endabschnitt ist, der außerhalb einer den Lagerring partiell aufnehmenden Aufnahmevertiefung des Antriebsgehäuses liegt und der über den die Aufnahmevertiefung umrahmenden Flächenabschnitt der ersten Außenfläche des Antriebsgehäuses vorsteht, und dass die Abtriebseinheit und der Lagerring zu einer selbsttragenden Abtriebsbaugruppe zusammengefügt sind, wobei die Abtriebseinheit allein durch den mit dem Antriebsgehäuse verschraubten Lagerring axial unbeweglich bezüglich des Antriebsgehäuses fixiert ist und wobei die Abtriebseinheit einen von dem Lagerring konzentrisch umschlossenen und mit mindestens einer Befestigungsschnittstelle ausgestatteten Abtriebsteller und eine mit dem Abtriebsteller verbundene, den Abtriebszahnkranz tragende Abtriebswelle aufweist.

Auf diese Weise kann der Lagerring ohne zusätzliche Befestigungsschrauben sehr einfach und exakt am Antriebsgehäuse der Drehantriebsvorrichtung befestigt werden. Zur Montage ist der Lagerring lediglich mit seiner Unterseite voraus im Bereich des Gegengewindes an die erste Außenfläche des Antriebsgehäuses anzusetzen und durch anschließendes Verdrehen des Befestigungsgewindes in das Gegengewinde einzuschrauben. Wenn das Befestigungsgewinde, was vorzugsweise der Fall ist, drehfest an dem Lagerring angeordnet ist, lässt sich die Schraubverbindung durch ein einfaches Verdrehen des gesamten Lagerringes problemlos herstellen. Da zur Fixierung des Lagerringes keine separaten Befestigungsschrauben benötigt werden, ist der Materialaufwand zur Realisierung der Schraubverbindung sehr gering und der Handhabungsaufwand minimal. Da in Ermangelung separater Befestigungsschrauben auch auf zur Aufnahme von Befestigungsschrauben dienende Bohrungen im Lagerring verzichtet werden kann, kann die radiale Baubreite des Ringkörpers des Lagerringes sehr klein ausfallen, so dass der Lagerring insgesamt über einen relativ kleinen Außendurchmesser verfügen kann und sich das zugeordnete Antriebsgehäuse mit schmaler Bauweise verwirklichen lässt.

Indem der Lagerring mit einem Teil seiner axialen Höhe in einer im Bereich der ersten Außenfläche am Antriebsgehäuse ausgebildeten Aufnahmevertiefung aufgenommen ist, lässt sich die Drehantriebsvorrichtung mit vorteilhaft geringer Bauhöhe verwirklichen. Außerdem steht der Lagerring nur verhältnismäßig wenig über die benachbarte Außenfläche des Antriebsgehäuses vor.

Der zweckmäßigerweise über eine kreisförmige Außenkontur verfügende Lagerring verfügt über einen zweckmäßigerweise am Au-βenumfang das Befestigungsgewinde aufweisenden Gewindeabschnitt und einen sich an diesen Gewindeabschnitt in Richtung zu der der Unterseite entgegengesetzten Oberseite des Lagerringes hin anschließenden oberen Endabschnitt, an dessen Au-βenumfang kein Gewinde vorgesehen ist. Hier eignet sich der gewindelose obere Endabschnitt besonders gut zum Erfassen des Lagerringes während seiner Einschraubmontage. Auch lässt sich der Lagerring an diesem gewindelosen oberen Endabschnitt gut ergreifen, wenn er, beispielsweise zu Reparaturzwecken, vom Antriebsgehäuse entfernt werden soll. Im montierten Zustand des Lagerringes liegt der gewindelose obere Endabschnitt außerhalb einer den Lagerring teilweise aufnehmenden Aufnahmevertiefung.

Bei der Drehantriebsvorrichtung bilden die Abtriebseinheit und der Lagerring eine selbsttragende und fest zusammengefügte Baugruppe, die als Abtriebsbaugruppe bezeichnet sei. Diese Abtriebs-baugruppe kann im vormontierten Zustand als Baueinheit an dem Antriebsgehäuse montiert werden, wobei zwischen der Abtriebseinheit und dem Lagerring eine derartige Verbindung vorliegt, dass die Abtriebseinheit allein durch den mit dem Antriebsgehäuse verschraubten Lagerring axial unbeweglich am Antriebsgehäuse fixiert ist. Mithin lässt sich die Abtriebsbaugruppe nach dem Herausschrauben des Befestigungsgewindes aus dem Gegengewinde auch als Einheit wieder vom Antriebsgehäuse abnehmen, was etwaige Wartungs- und Reparaturarbeiten sehr vereinfacht.

Man kann auch sagen, dass die Abtriebsbaugruppe mit zumindest einem Teil ihrer Länge patronenartig in das Antriebsgehäuse einsetzbar ist und dementsprechend auch sehr einfach wieder durch umgekehrten Bewegungsablauf als Gesamtheit entnommen werden kann.

Für die Abtriebseinheit ist ein Aufbau vorgesehen, bei dem sie einen von dem Lagerring konzentrisch umschlossenen, außen insbesondere kreisrunden Abtriebsteller aufweist, der über mindestens eine Befestigungsschnittstelle verfügt, an der sich eine zu einer Drehbewegung anzutreibende externe Komponente fixieren lässt. Eine solche externe Komponente kann beispielsweise eine zur Handhabung von Gegenständen nutzbare Greifvorrichtung sein.

Vorteilhafte Weiterbildungen der Erfindung gehen aus den Unteransprüchen hervor.

Zweckmäßigerweise ist jeder der beiden länglichen Räume als Antriebsraum ausgebildet, in dem eine durch gesteuerte Fluidbeaufschlagung linear verschiebbare Antriebseinheit angeordnet ist, die an ihrer der Zwischenwand zugewandten Längsseite eine Antriebsverzahnung aufweist. In diesem Fall stehen beide Antriebseinheiten gleichzeitig mit dem Abtriebszahnkranz in Verzahnungseingriff, indem selbiger zweckmäßigerweise zwischen die beiden Antriebseinheiten eingreift. Auf diese Weise lässt sich ein besonders hohes Drehmoment an der Abtriebseinheit hervorrufen.

Das Befestigungsgewinde ist zweckmäßigerweise einstückig an dem Lagerring ausgebildet. Dadurch lassen sich Lagerring und Befestigungsgewinde zum einen sehr kostengünstig, zum anderen aber auch sehr präzise, mit exakt koaxialer Zuordnung, verwirklichen.

Das Gegengewinde ist an dem Antriebsgehäuse vorzugsweise ebenfalls einstückig ausgebildet. Auch dies hat den Vorteil einer einfachen und dennoch präzisen Fertigungsmöglichkeit.

Gleichwohl kann das Befestigungsgewinde und/oder das Gegengewinde an der jeweils zugeordneten Komponente auch als separates Bauteil angebracht sein. Diese Maßnahme hat den Vorteil, dass ein für das Gewinde speziell geeignetes Material unabhängig vom Material des Lagerringes und/oder des Antriebsgehäuses ausgewählt werden kann.

Am einfachsten lässt sich die Schraubverbindung dadurch realisieren, dass das Befestigungsgewinde als Außengewinde und das Gegengewinde als Innengewinde ausgebildet ist. Die Befestigungsmaßnahme des Lagerringes besteht hierbei in einem Einschrauben des Befestigungsgewindes in das am Antriebsgehäuse angeordnete Gegengewinde. Vorzugsweise befindet sich das Befestigungsgewinde an einem nach radial außen orientierten peripheren Außenumfang des Lagerringes, so dass es über einen relativ großen Durchmesser verfügen kann, was für die Festigkeit des Gewindes, insbesondere bei einer Belastung durch Kippkräfte, von Vorteil ist.

Das mit dem Befestigungsgewinde kooperierende Gegengewinde befindet sich zweckmäßigerweise am peripheren Innenumfang der Aufnahmevertiefung. Es kann insbesondere einstückig in den peripheren Innenumfang der Aufnahmevertiefung eingeformt sein.

Es ist von Vorteil, wenn Anschlagmittel vorhanden sind, die die Einschraubtiefe des Lagerringes mit Bezug zum Antriebsgehäuse klar definieren. Dadurch ist unter anderem gewährleistet, dass der Abtriebszahnkranz der an dem Lagerring drehgelagerten Abtriebseinheit die gewünschte Relativposition bezüglich der an den Antriebseinheiten angeordneten Antriebsverzahnungen einnimmt.

Die Anschlagmittel verfügen zweckmäßigerweise über mindestens eine an dem Lagerring angeordnete und dem Antriebsgehäuse zugewandte Anschlagfläche, die insbesondere ringförmig ausgebildet und koaxial zu dem Lagerring angeordnet ist und die zur Vorgabe der gewünschten Einschraubtiefe an einer am Antriebsgehäuse angeordneten und ihr zugewandten Gegenanschlagfläche anliegt. Auch diese Gegenanschlagfläche ist zweckmäßigerweise ringförmig gestaltet.

Mindestens eine Anschlagfläche kann sich an der Unterseite des Lagerringes befinden, insbesondere unmittelbar angrenzend oder auch mit gewissem Abstand zum Befestigungsgewinde. Die zugeordnete Gegenanschlagfläche befindet sich hierbei zweckmäßigerweise an einer Grundfläche einer im Antriebsgehäuse ausgebildeten Aufnahmevertiefung, in die der Lagerring so weit einschraubbar ist, bis seine Anschlagfläche an der als Gegenanschlagfläche fungierenden Grundfläche der Aufnahmevertiefung zur Anlage gelangt.

Eine zusätzliche oder alternative Möglichkeit zur Realisierung von Anschlagmitteln besteht darin, eine ringförmige und zum Lagerring konzentrische Anschlagfläche oberhalb des Befestigungsgewindes mit Abstand zur Unterseite und zur Oberseite des Lagerringes vorzusehen, wobei die zugeordnete Gegenanschlagfläche in diesem Fall insbesondere von einem Flächenabschnitt der ersten Außenfläche des Antriebsgehäuses gebildet ist, der eine Aufnahmevertiefung des Antriebsgehäuses umrahmt, in der der Lagerring teilweise in Höhenrichtung aufgenommen ist.

Die erfindungsgemäße Schraubbefestigung des Lagerringes hat insgesamt auch den Vorteil, dass keine zur Befestigung des Lagerringes dienenden Schraubenaufnahmekanäle im Antriebsgehäuse ausgebildet werden müssen, so dass selbiges materialsparend mit geringer Wandstärke und mit kompakten Abmessungen realisierbar ist. Außerdem ergeben sich keinerlei Beeinträchtigungen für die Integration eines zur Fluidbetätigung der Drehantriebsvorrichtung in das Antriebsgehäuse zu integrierenden Fluidkanalsystems.

Es ist von Vorteil, wenn der Ringkörper des Lagerringes axial durchbrechungslos ausgebildet ist. Auf diese Weise lässt sich ein nach außen hin unperforierter und daher wenig verschmutzungsanfälliger Lagerring realisieren. Darüber hinaus verfügt ein undurchbrochener Lagerring über eine besonders hohe Struktursteifigkeit und verhindert ein Eindringen von Verunreinigungen ins Innere des Antriebsgehäuses.

Den Zusammenhalt zwischen der Abtriebseinheit und dem Lagerring gewährleisten zweckmäßigerweise zwischen den beiden Komponenten angeordnete Lagermittel, die insbesondere in Form von Wälzlagermitteln ausgebildet sind und die eine bevorzugt formschlüssige Verbindung zwischen der Abtriebseinheit und dem Lagerring zur Verfügung stellen.

Der Abtriebsteller ist zweckmäßigerweise einstückig mit einer Abtriebswelle verbunden, die sich in Achsrichtung der Drehachse von dem Abtriebsteller weg erstreckt und nach unten hin über den Lagerring hinausragt. Im montierten Zustand taucht die Abtriebswelle im Bereich der Zwischenwand zwischen die beiden länglichen Räume ein. Die Abtriebswelle trägt dabei den Abtriebszahnkranz, welcher vorzugsweise einstückig an die Abtriebswelle angeformt ist. Insgesamt besteht die Möglichkeit, den Abtriebsteller, die Abtriebswelle und den Abtriebszahnkranz in Form eines einstückigen Bauteils zu realisieren, das sich kostengünstig herstellen und montieren lässt.

Für den Aufbau der Antriebseinheiten empfiehlt sich zweckmä-βigerweise jeweils das Vorsehen zweier stirnseitiger Kopfabschnitte und eines sich zwischen diesen beiden Kopfabschnitten erstreckenden, eine Antriebsverzahnung tragenden Zahnstangenabschnittes. Jede Antriebsverzahnung ist vorzugsweise zahnstangenartig mit linearer Erstreckung ausgebildet und angeordnet.

Nachfolgend wird die Erfindung anhand der beiliegenden Zeichnung näher erläutert. In dieser zeigen:
- Figur 1: eine bevorzugte Ausführungsform der erfindungsgemäβen Drehantriebsvorrichtung in einer perspektivischen Außenansicht mit Blick auf die hier nach oben weisende erste Außenfläche des Antriebsgehäuses, in deren Bereich der Lagerring montiert ist,
- Figur 2: die Anordnung aus Figur 1 in einer Explosionsdarstellung des Antriebsgehäuses und der den Lagerring und die Abtriebseinheit enthaltenden Abtriebsbaugruppe,

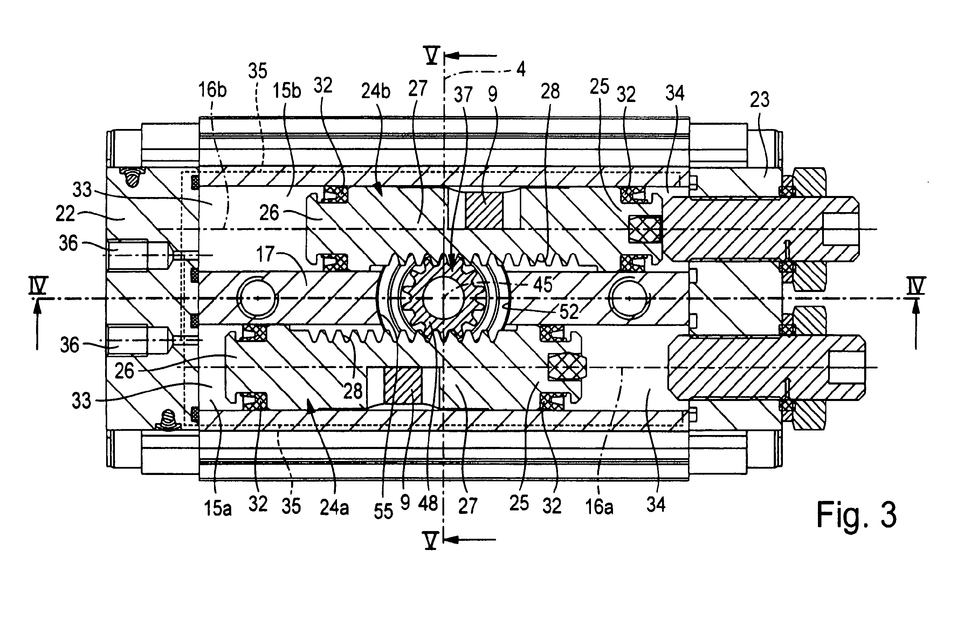

- Figur 3: einen Längsschnitt der Drehantriebsvorrichtung in einer zur Drehachse der Abtriebseinheit rechtwinkeligen Ebene gemäß Schnittlinie III-III aus Figuren 1 und 5,

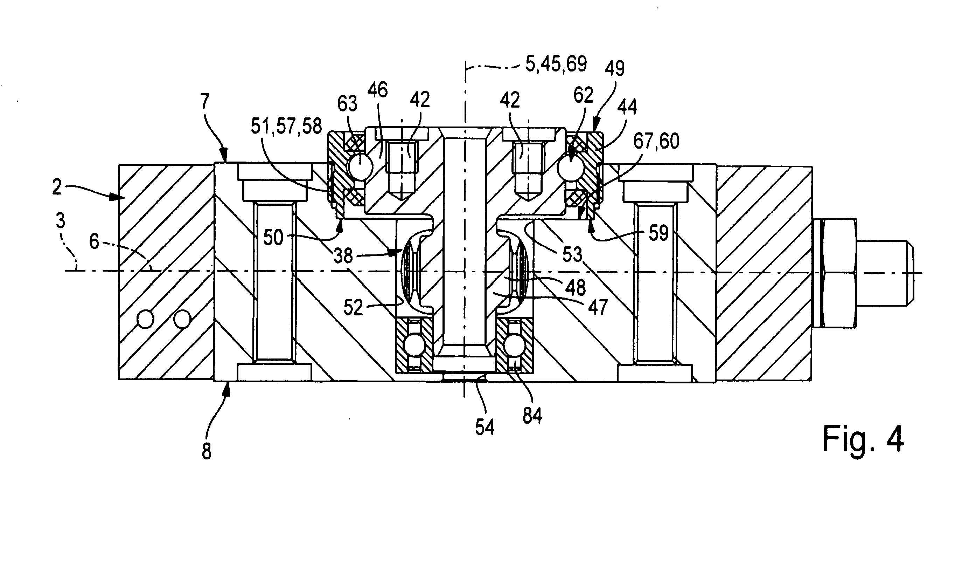

- Figur 4: einen Längsschnitt durch die Drehantriebsvorrichtung in einer zur Drehachse der Abtriebseinheit parallelen Ebene und gemäß Schnittlinie IV-IV aus Figuren 1, 3 und 5, und
- Figur 5: einen Querschnitt durch die Drehantriebsvorrichtung im Bereich der Drehachse und gemäß Schnittlinie V-V aus Figuren 1 und 3.

Die in ihrer Gesamtheit mit Bezugsziffer 1 bezeichnete Drehantriebsvorrichtung ist zur Betätigung mittels Fluidkraft ausgelegt und lässt sich mittels eines fluidischen und bevorzugt gasförmigen Druckmediums antreiben. Vorzugsweise ist Druckluft als Antriebsmedium vorgesehen.

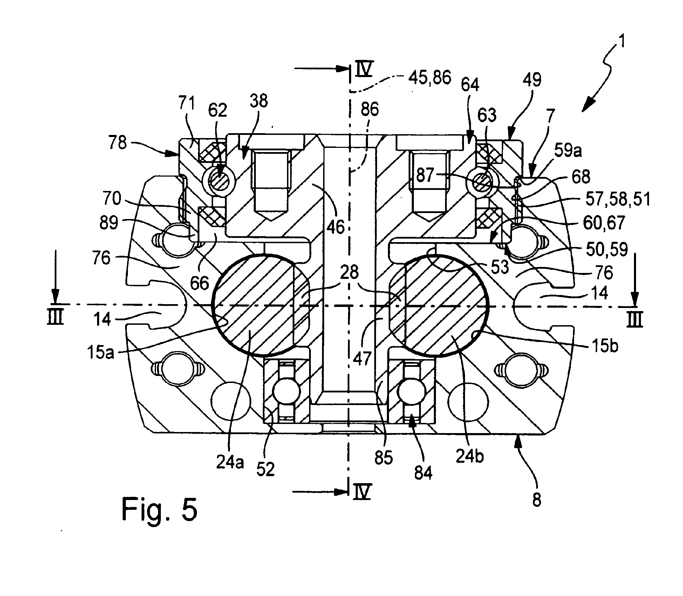

Die Drehantriebsvorrichtung 1 verfügt über ein vorzugsweise längliches und insbesondere aus Metall bestehendes Gehäuse, das als Antriebsgehäuse 2 bezeichnet sei. Es erstreckt sich entlang einer strichpunktiert angedeuteten gedachten Hauptachse 3, bei der es sich zweckmäßigerweise um die Längsachse des Antriebsgehäuses 2 handelt. In Figur 5 verläuft die Hauptachse 3 rechtwinkelig zur Zeichenebene.

Das Antriebsgehäuse 2 hat außer der Hauptachse 3 auch noch eine zu der Hauptachse 3 rechtwinkelige Querachse 4 und eine zu sowohl der Hauptachse 3 als auch der Querachse 4 rechtwinkelige Hochachse 5. Die Hauptachse 3 und die Querachse 4 spannen gemeinsam eine als Hauptebene 6 bezeichnete Ebene auf.

An seiner Außenseite verfügt das Antriebsgehäuse 2 über mehrere Außenflächen. Es weist insbesondere eine in Achsrichtung der Hochachse 5 orientierte erste Außenfläche 7 und eine diesbezüglich entgegengesetzt orientierte zweite Außenfläche 8 auf. Die erste Außenfläche 7 befindet sich an der Oberseite, die zweite Außenfläche 8 an der Unterseite des Antriebsgehäuses 2. Die Drehantriebsvorrichtung 1 kann mit beliebiger und auch mit wechselnder Ausrichtung betrieben werden, so dass beispielsweise die von der ersten Außenfläche 7 gebildete Oberseite auch nach unten weisen kann.

Rechtwinkelig zur Hauptachse 3 hat das Antriebsgehäuse 2 insbesondere einen länglichen Querschnitt. Hierbei handelt es sich vorzugsweise um einen rechteckähnlichen Querschnitt, dessen längere Seiten von den ersten und zweiten Außenflächen 7, 8 definiert werden. Die Schmalseiten des Querschnittes sind in Achsrichtung der Querachse 4 orientiert und sind exemplarisch von zwei einander entgegengesetzten seitlichen Außenflächen 12, 13 des Antriebsgehäuses 2 gebildet, die konvex nach außen gewölbt sein können.

Vorzugsweise ist in einer oder in beiden seitlichen Außenflächen 12, 13 mindestens eine in Achsrichtung der Hauptachse 3 verlaufende Befestigungsnut 14 ausgebildet, an der sich Zusatzkomponenten fixieren lassen. Mindestens eine Befestigungsnut 14 eignet sich zweckmäßigerweise zur Befestigung mindestens einer Positionserfassungseinrichtung, die zweckmä-βigerweise mindestens einen Positionssensor aufweist. Mit Hilfe einer solchen Positionserfassungseinrichtung lässt sich unter anderem die bezüglich des Antriebsgehäuses 2 eingenommene Relativposition mindestens einer weiter unten noch erläuterten ersten oder zweiten Antriebseinheit 24a, 24b detektieren, die mit einem die Positionserfassungseinrichtung berührungslos aktivierenden Betätigungselement 9 ausgestattet sein können.

Im Innern des Antriebsgehäuses 2 sind zwei jeweils eine Längserstreckung aufweisende, erste und zweite Räume 15a, 15b ausgebildet, die aufgrund ihrer Funktion im Folgenden auch als Antriebsräume 15a, 15b bezeichnet werden. Diese Antriebsräume 15a, 15b erstrecken sich parallel zueinander und haben jeweils eine Längsachse 16a, 16b, die parallel zu der Hauptachse 3 ausgerichtet ist.

Die beiden Antriebsräume 15a, 15b sind in Achsrichtung der Querachse 4 mit Abstand nebeneinander angeordnet und durch eine sich zwischen ihnen erstreckende, insbesondere zum Antriebsgehäuse 2 gehörende Zwischenwand 17 voneinander abgetrennt. Die Zwischenwand 17 ist insbesondere ein einstückiger Bestandteil des Antriebsgehäuses 2. Die Längsachsen 16a, 16b der beiden Antriebsräume 15a, 15b liegen zweckmäßigerweise in der Hauptebene 6.

Vor allem der Figur 5 kann entnommen werden, dass jeder Antriebsraum 15a, 15b zweckmäßigerweise einen runden und vorzugsweise einen kreisrunden Querschnitt hat. Es handelt sich also insbesondere um zylindrische und vorzugsweise um kreiszylindrische Antriebsräume 15a, 15b.

Das Antriebsgehäuse 2 setzt sich zweckmäßigerweise aus einem die beiden Antriebsräume 15a, 15b in voller Länge enthaltenden Gehäusehauptkörper 18 und zwei an die beiden in Achsrichtung der Hauptachse 3 weisenden Stirnseiten des Gehäusehauptkörpers 18 angesetzten ersten und zweiten Gehäusedeckeln 22, 23 zusammen. Letztere sind mit dem Gehäusehauptkörper 18 vorzugsweise verschraubt. Die Zwischenwand 17 ist zweckmäßigerweise ein einstückiger Bestandteil des Gehäusehauptkörpers 18.

In dem ersten Antriebsraum 15a ist die erste Antriebseinheit 24a in Achsrichtung der zugeordneten Längsachse 16a linear verschiebbar angeordnet. In vergleichbarer Weise nimmt der zweite Antriebsraum 15b die zweite Antriebseinheit 24b in Achsrichtung der zugeordneten Längsachse 16b linear verschiebbar auf. Die Linearbewegung der beiden Antriebseinheiten 24a, 24b kann durch gesteuerte Fluidbeaufschlagung mit dem weiter oben schon erwähnten fluidischen Antriebsmedium hervorgerufen werden.

Jede Antriebseinheit 24a, 24b verfügt zweckmäßigerweise über zwei in Achsrichtung der Längsachse 16a, 16b mit Abstand zueinander angeordnete Kopfabschnitte 25, 26, die über einen sich zwischen ihnen erstreckenden Zahnstangenabschnitt 27 miteinander verbunden sind. Jeder Zahnstangenabschnitt 27 weist an seiner der Zwischenwand 17 zugewandten Längsseite eine insbesondere zahnstangenartig ausgebildete Antriebsverzahnung 28 auf, welche sich in der Achsrichtung der jeweils zugeordneten Längsachse 16a, 16b erstreckt.

Vorzugsweise besteht jede Antriebsverzahnung 28 aus einer Mehrzahl von in einer gemeinsamen Ebene angeordneten und in Achsrichtung der Längsachse 16a, 16b aufeinanderfolgend angeordneten Zähnen, die sich jeweils quer und insbesondere rechtwinkelig zu der genannten Längsachse 16a, 16b erstrecken.

Bei jeder Antriebsverzahnung 28 handelt es sich zweckmäßigerweise um einen einstückigen Bestandteil des zugeordneten Zahnstangenabschnittes 27. Allerdings kann sie auch als separater Körper ausgebildet und mit Hilfe beliebiger Befestigungsmittel an dem Zahnstangenabschnitt 27 befestigt sein.

Jeder Kopfabschnitt 25, 26 steht über eine von ihm getragene ringförmige Dichtungsanordnung 32 in dynamischem Dichtkontakt mit der peripheren Wandung des zugeordneten Antriebsraumes 15a, 15b. Auf diese Weise wird jeder Antriebsraum 15a, 15b fluiddicht in zwei Arbeitskammern 33, 34 unterteilt, die über ein nur gestrichelt angedeutetes internes Fluidkanalsystem 35 mit zur Außenoberfläche des Antriebsgehäuses 2 ausmündenden Anschlussöffnungen 36 kommunizieren. Zweckmäßigerweise befinden sich die Anschlussöffnungen 36 an einem der beiden Gehäusedeckel 22.

Die Anschlussöffnungen 36 können zum Betreiben der Drehantriebsvorrichtung 1 über nicht gezeigte Fluidleitungen unter Zwischenschaltung einer Steuerventileinrichtung mit einer das Antriebsmedium liefernden Druckquelle verbunden werden. Durch entsprechende Betätigung der Steuerventileinrichtung können die Arbeitskammern 33, 34 in derart aufeinander abgestimmter Weise fluidbeaufschlagt oder druckentlastet werden, dass die beiden Antriebseinheiten 24a, 24b synchron gegensinnige Linearbewegungen ausführen.

Die durch Fluidbeaufschlagung hervorrufbaren Linearbewegungen der beiden Antriebseinheiten 24a, 24b werden durch Getriebemittel 37 der Drehantriebsvorrichtung 1 in eine Drehbewegung einer Abtriebseinheit 38 umgewandelt. Diese Drehbewegung ist bei 43 durch einen Doppelpfeil angedeutet. Die Drehrichtung der Drehbewegung 43 hängt von der Bewegungsrichtung der Antriebseinheiten 24a, 24b ab und erfolgt wahlweise im Uhrzeigersinn oder entgegen des Uhrzeigersinns. Indem die Antriebseinheiten 24a, 24b zu einer hin- und hergehenden Linearbewegung angetrieben werden, lässt sich an der Abtriebs-einheit 38 eine oszillierende Drehbewegung 43 abgreifen.

Abweichend vom Ausführungsbeispiel kann von den beiden zueinander parallelen länglichen Räumen 15a, 15b der Drehantriebsvorrichtung 1 auch nur einer als Antriebsraum ausgebildet und mit einer Antriebseinheit bestückt sein. In diesem Fall wird die Abtriebseinheit 38 durch nur eine Antriebseinheit angetrieben. Der andere längliche Raum kann dann leer bleiben oder für andere Zwecke genutzt werden.

Um diese Drehbewegung 43 bequem abgreifen zu können, ist die Abtriebseinheit 38 zweckmäßigerweise mit mindestens einer Befestigungsschnittstelle 42 ausgestattet, die exemplarisch durch mehrere Befestigungslöcher repräsentiert wird und an der sich eine insbesondere rotativ zu bewegende externe Komponente in insbesondere lösbarer Weise befestigen lässt. Die externe Komponente ist beispielsweise eine Komponente einer zur Handhabung von Gegenständen eingesetzten Handhabungseinrichtung, beispielsweise eine Greifvorrichtung.

Die Abtriebseinheit 38 ist zur Ermöglichung ihrer Drehbewegung 43 unter Zwischenschaltung eines bezüglich ihr und bezüglich des Antriebsgehäuses 2 separaten Lagerringes 44 an dem Antriebsgehäuse 2 drehbar gelagert. Durch die Drehlagerung wird eine Drehachse 45 für die Drehbewegung 43 definiert, die zweckmäßigerweise mit der Hochachse 5 des Antriebsgehäuses 2 gleichgerichtet ist. Die Drehachse 45 verläuft somit rechtwinkelig zur Hauptachse 3 und zweckmäßigerweise auch rechtwinkelig zu der oben definierten Hauptebene 6.

Vorzugsweise verfügt die Abtriebseinheit 38 über einen im Wesentlichen scheibenförmigen Abtriebsteller 46, dessen Längsachse mit der Drehachse 45 zusammenfällt. An ihm befindet sich zweckmäßigerweise die Befestigungsschnittstelle 42.

Darüber hinaus weist die Abtriebseinheit 38 zweckmäßigerweise eine zu dem Abtriebsteller 46 koaxiale Abtriebswelle 47 auf, die drehfest und insbesondere einstückig mit dem Abtriebsteller 46 verbunden ist und die an einer Unterseite des Abtriebstellers 46 wegragt.

Die Abtriebswelle 47 trägt in konzentrischer Anordnung einen Abtriebszahnkranz 48. Dieser Abtriebszahnkranz 48 befindet sich am Außenumfang der Abtriebswelle 47 und erstreckt sich rings um die Abtriebswelle 47 herum. Vorzugsweise ist der Abtriebszahnkranz 48 nach Art eines Zahnrades beziehungsweise eines Ritzels ausgebildet. Er verfügt insbesondere über eine Geradverzahnung, wobei seine Zähne jeweils parallel zu der Drehachse 45 ausgerichtet sind.

Es ist zweckmäßig, wenn der Abtriebszahnkranz 48 einstückig mit der Abtriebswelle 47 verbunden ist, was beim Ausführungsbeispiel der Fall ist. Besonders kostengünstig ist eine Bauform der Abtriebseinheit 38, bei der der Abtriebsteller 46, die Abtriebswelle 47 und der Abtriebszahnkranz 48 in Form eines einzigen Bauteils ausgebildet sind.

Das Antriebsgehäuse 2 verfügt über eine Gehäuseausnehmung 52, die über eine im Folgenden zur besseren Unterscheidung als erste Ausnehmungsmündung 53 bezeichnete Mündung zur ersten Außenfläche 7, also zur Oberseite des Antriebsgehäuses 2 ausmündet. Ausgehend von dieser ersten Ausnehmungsmündung 53 erstreckt sich die Gehäuseausnehmung 52 ins Innere des Antriebsgehäuses 2 hinein, wobei sie sich zwischen den beiden Antriebsräumen 15a, 15b erstreckt. Die mit der Hochachse 5 zusammenfallende Längsachse der Gehäuseausnehmung 52 ist insbesondere so angeordnet, dass sie in der Achsrichtung der Hochachse 5 in die Zwischenwand 17 eindringt.

Exemplarisch ist die Länge der Gehäuseausnehmung 52 so gewählt, dass sie das Antriebsgehäuse 2 und mithin auch die Zwischenwand 17 in der Höhenrichtung des Antriebsgehäuses 2 vollständig durchsetzt und mit einer der ersten Ausnehmungsmündung 53 entgegengesetzten zweiten Ausnehmungsmündung 54 zur zweiten Außenfläche 8 an der Unterseite des Antriebsgehäuses 2 ausmündet. Allerdings kann die Gehäuseausnehmung 52 an ihrem der ersten Ausnehmungsmündung 53 entgegengesetzten Endbereich auch geschlossen sein, insbesondere indem sie vor Erreichen der zweiten Außenfläche 8 nach Art eines Sackloches im Innern des Antriebsgehäuses 2 endet.

Der Querschnitt der Gehäuseausnehmung 52 ist zumindest auf der Höhe der beiden Antriebsräume 15a, 15b größer als die in Achsrichtung der Querachse 4 gemessene Breite der Zwischenwand 17. Auf diese Weise werden die beiden Antriebsräume 15a, 15b von der Gehäuseausnehmung 52 an den einander zugewandten inneren Längsseiten angeschnitten. Es ergibt sich somit durch die Gehäuseausnehmung 52 hindurch eine Querverbindung zwischen den beiden Antriebsräumen 15a, 15b.

Die Querschnittsabmessungen der Gehäuseausnehmung 52 sind allerdings so gewählt, dass die Gehäuseausnehmung 52 unabhängig von der Axialposition der beiden Antriebseinheiten 24a, 24b niemals mit einer der beiden Arbeitskammern 33, 34 in Verbindung steht. Die Dichtungsanordnungen 32 der beiden Kopfabschnitte 25, 26 sind so weit axial zueinander beabstandet, dass eine von der Gehäuseausnehmung 52 gebildete Wanddurchbrechung 55 der Zwischenwand 17 stets zwischen den Dichtungsanordnungen 32 der beiden Kopfabschnitte 25, 26 jeder Antriebseinheit 24a, 24b zu liegen kommt. Auf diese Weise ist ein Fluidaustritt aus den Arbeitskammern 33, 34 in die Gehäuseausnehmung 52 hinein ausgeschlossen.

Die Abtriebseinheit 38 greift, mit ihrer nach unten ragenden Abtriebswelle 47 voraus, von der der ersten Außenfläche 7 zugeordneten Oberseite her in die Gehäuseausnehmung 52 ein. Der Abtriebszahnkranz 48 kommt dabei im Bereich der Wanddurchbrechung 55 zwischen den beiden Antriebseinheiten 24a, 24b zu liegen und steht mit den Antriebsverzahnungen 28 beider Antriebseinheiten 24a, 24b in Verzahnungseingriff. Auf diese Weise ist der Abtriebszahnkranz 48 ein Bestandteil der Getriebemittel 37, wobei eine Linearbewegung der Antriebseinheiten 24a, 24b zur Folge hat, dass der Abtriebszahnkranz 48 und mithin die gesamte Abtriebseinheit 38 zu der Drehbewegung 43 um die Drehachse 45 angetrieben wird.

Wenn die Drehantriebsvorrichtung 1 mit nur einer Antriebseinheit ausgestattet ist, kämmt der Abtriebszahnkranz 48 selbstverständlich nur mit deren Antriebsverzahnung.

Im Bereich der ersten Außenfläche 7 ist die Abtriebseinheit 38 an dem Lagerring 44 drehbar gelagert, der seinerseits unbeweglich am Antriebsgehäuse 2 befestigt ist.

Der Lagerring 44 verfügt über zwei einander axial entgegengesetzt orientierte erste und zweite axiale Stirnflächen 49, 50, von denen die erste Stirnfläche 49 eine Oberseite und die zweite Stirnfläche 50 eine Unterseite des Lagerringes 44 bildet. Mit seiner Unterseite beziehungsweise zweiten Stirnfläche 50 voraus ist der Lagerring 44 im Bereich der ersten Au-βenfläche 7, also an der Oberseite des Antriebsgehäuses 2, fest montiert. Dies erfolgt mittels einer Schraubverbindung 51.

Der Lagerring 44 umschließt die Abtriebseinheit 38 in koaxialer Anordnung. Wenn die Abtriebseinheit 38, wie beim Ausführungsbeispiel, einen Abtriebsteller 46 aufweist, ist der Lagerring 44 vorzugsweise so angeordnet, dass er in einer gemeinsamen Ebene mit dem Abtriebsteller 46 liegt und diesen konzentrisch umschließt. Die vorgenannte gemeinsame Ebene verläuft rechtwinkelig zur Drehachse 45 und zu der mit dieser zusammenfallenden Längsachse der Gehäuseausnehmung 52.

Konzentrisch zwischen dem Lagerring 44 und der Abtriebseinheit 38 beziehungsweise dem Abtriebteller 46 sind zweckmäßigerweise Lagermittel 62 angeordnet, durch die die Abtriebseinheit 38 in radialer Richtung und vorzugsweise auch in axialer Richtung bezüglich des Lagerringes 44 derart abgestützt ist, dass sie relativ zu dem Lagerring 44 um ihre Drehachse 45 rotieren kann.

Vorzugsweise stehen die Lagermittel 62 sowohl mit dem Innenumfang des Lagerringes 44 als auch mit dem Außenumfang des Abtriebstellers 46 in formschlüssigem Eingriff. Auf diese Weise sind der Lagerring 44 und der Abtriebsteller 46 zweckmäßigerweise axial in beiden Richtungen relativ zueinander unbeweglich fixiert, gleichzeitig aber relativ zueinander verdrehbar.

Bei den Lagermitteln 62 handelt es sich vorzugsweise um Wälzlagermittel. Sie verfügen zweckmäßigerweise über mehrere radial zwischen dem Lagerring 44 und dem Abtriebsteller 46 angeordnete und kranzförmig entlang des Außenumfanges des Abtriebstellers 46 verteilte Wälzlagerelemente 63 - beispielsweise Kugeln oder Rollen -, die sich bei der Drehbewegung 43 der Abtriebseinheit 38 an sowohl der Abtriebseinheit 38 als auch dem Lagerring 44 abwälzen können. Zweckmäßigerweise sind die Wälzlagerelemente 63 durch ein Käfigelement zusammengehalten.

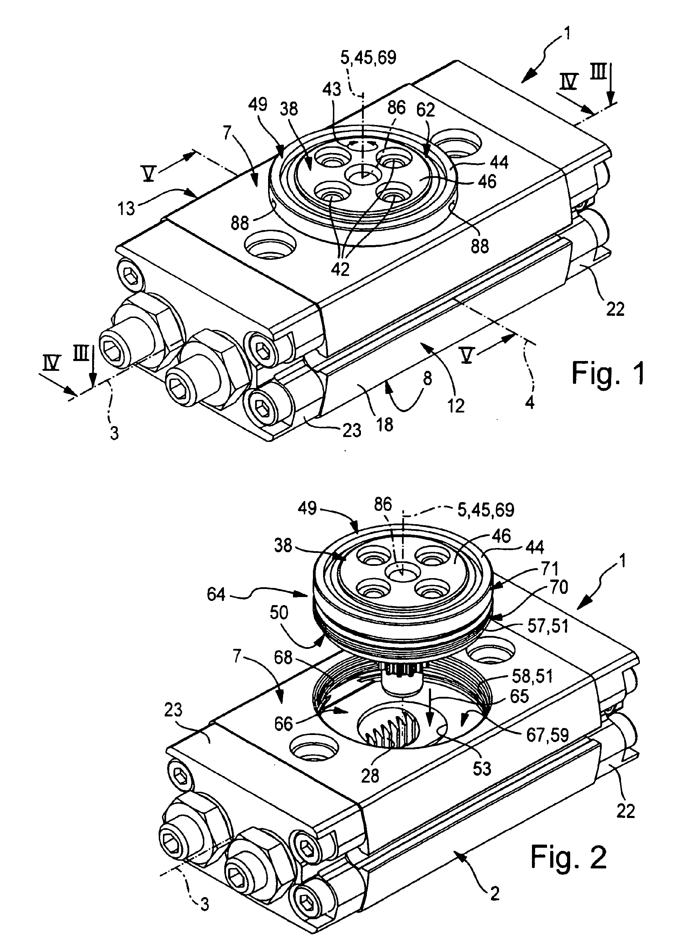

Exemplarisch sind die Lagermittel 62 so ausgebildet, dass die Abtriebseinheit 38 und der Lagerring 44 in vorteilhafter Weise zu einer selbsttragenden Abtriebsbaugruppe 64 zusammengefügt sind, die als vormontierte Baueinheit am Antriebsgehäuse 2 montierbar beziehungsweise montiert ist. Die Figur 2 illustriert in diesem Zusammenhang sehr gut, wie die vor der Anbringung am Antriebsgehäuse 2 vormontierte Abtriebsbaugruppe 64 beim Zusammenbau der Drehantriebsvorrichtung 1 in einer mit der Achsrichtung der Hochachse 5 zusammenfallenden Montagerichtung 65 im Bereich der ersten Außenfläche 7 an das Antriebsgehäuse 2 ansetzbar ist. Bei diesem Ansetzen taucht die den Lagerring 44 an seiner Unterseite 50 überragende Abtriebswelle 47 durch die erste Ausnehmungsmündung 53 hindurch in die Gehäuseausnehmung 52 ein, wobei der Abtriebszahnkranz 48 mit den Antriebsverzahnungen 28 der beiden Antriebseinheiten 24a, 24b in Eingriff gelangt.

Der in der Montagerichtung 65 stattfindende Einsetzvorgang ist beendet, wenn die Abtriebsbaugruppe 64 mit einer in der Montagerichtung 65 orientierten Anschlagfläche 59 an einer insbesondere von einem Flächenabschnitt der ersten Außenfläche 7 des Antriebsgehäuses 2 gebildeten Gegenanschlagfläche 60 zur Anlage gelangt ist. Auf diese Weise ist auch die Eintauchtiefe des Abtriebszahnkranzes 48 definiert, die so gewählt ist, dass der Abtriebszahnkranz 48 auf gleicher Höhe mit den beiden Antriebsverzahnungen 28 zwischen diesen Antriebsverzahnungen 28 zu liegen kommt.

Zweckmäßigerweise ist das Antriebsgehäuse 2 im Bereich der ersten Außenfläche 7 mit einer sich an die erste Ausnehmungsmündung 53 koaxial anschließenden Aufnahmevertiefung 66 versehen, die zu der dem Antriebsgehäuse 2 entgegengesetzten Oberseite hin offen ist und deren Durchmesser beziehungsweise Querschnitt größer ist als derjenige der Gehäuseausnehmung 52 im Bereich der ersten Ausnehmungsmündung 53. Die Aufnahmevertiefung 66 besitzt eine axial nach oben weisende Grundfläche 67, die die erste Ausnehmungsmündung 53 umrahmt.

Im an dem Antriebsgehäuse 2 montierten Zustand der Abtriebsbaugruppe 64 taucht der Lagerring 44 mit zumindest einem Teil seiner axialen Höhe in die Aufnahmevertiefung 66 ein. Dabei bildet seine Unterseite beziehungsweise seine zweite axiale Stirnfläche 50 die Anschlagfläche 59, mit der er an der als Gegenanschlagfläche 60 fungierenden Grundfläche 67 der Aufnahmevertiefung 66 anliegt.

Im montierten Zustand ist die Anschlagfläche 59 des Lagerringes 44 zweckmäßigerweise in der Achsrichtung der Drehachse 45 mit der am Antriebsgehäuse 2 angeordneten Gegenanschlagfläche 60 verspannt.

Peripher ist die Aufnahmevertiefung 66 von einer insbesondere ringsum geschlossenen und radial orientierten Seitenwand 68 begrenzt. Sie definiert den peripheren Innenumfang der Aufnahmevertiefung 66. Der montierte Lagerring 44 wird durch die Seitenwand 68 an seinem radial nach außen orientierten peripheren Außenumfang 78 in radialer Richtung allseits unbeweglich gehäusefest abgestützt.

Wenn der Lagerring 44, wie dies zweckmäßigerweise der Fall ist, in dem in die Aufnahmevertiefung 66 eingreifenden Längenabschnitt kreiszylindrisch ausgebildet ist, hat die Seitenwand 68 zweckmäßigerweise eine hierzu komplementäre kreiszylindrische Kontur. Vorzugsweise ist der Lagerring 44 über seine gesamte axiale Länge hinweg mit einer kreisförmigen Au-βenkontur versehen.

Die Besonderheit der zur Fixierung des Lagerringes 44 am Antriebsgehäuse 2 vorhandenen Schraubverbindung 51 besteht darin, dass sie ohne eine separate Befestigungsschraube auskommt. Der Lagerring 44 ist mit einem bezüglich seines Zentrums konzentrisch angeordneten Befestigungsgewinde 57 versehen, mit dem er mit einem an dem Antriebsgehäuse 2 angeordneten komplementären Gegengewinde 58 verschraubt ist. Die Schraubverbindung 51 erfordert also lediglich zwei zueinander komplementäre Gewinde, von denen das eine - das Befestigungsgewinde 57 - am Lagerring 44 und das andere - das Gegengewinde 58 - am Antriebsgehäuse 2 angeordnet ist und die ineinander eingeschraubt werden. Auf diese Weise ergibt sich eine direkte Schraubverbindung zwischen dem Lagerring 44 und dem Antriebsgehäuse 2 ohne zusätzliche Befestigungsschrauben.

Zweckmäßigerweise ist das Befestigungsgewinde 57 als Außengewinde ausgebildet. Dies ist beim Ausführungsbeispiel der Fall, wo es sich am peripheren Außenumfang 78 des Lagerringes 44 befindet. Das Gegengewinde 58 ist hierbei als Innengewinde ausgebildet, das beim Ausführungsbeispiel im Innern der Aufnahmevertiefung 66 an deren Seitenwand 68 beziehungsweise an deren peripherem Innenumfang angeordnet ist.

Das Befestigungsgewinde 57 ist an dem Lagerring 44 zweckmäßigerweise sowohl in axialer Richtung fest angeordnet als auch drehfest angeordnet. Hierzu könnte es von einem Gewindering gebildet sein, der durch geeignete Befestigungsmaßnahmen mit dem Lagerring 44 fest verbunden ist, beispielsweise durch Verschweißen oder durch Verkleben. Besonders zweckmäßig ist jedoch eine Bauform gemäß dem Ausführungsbeispiel, bei der das Befestigungsgewinde 57 einstückig an dem Lagerring 44 ausgebildet ist.

Eine bezüglich des Lagerringes 44 drehfeste Anordnung des Befestigungsgewindes 57 hat den Vorteil, dass die Schraubverbindung durch einfaches Verdrehen des Lagerringes 44 um sein Zentrum 86 hergestellt oder auch wieder gelöst werden kann. Bei der Montage wird der Lagerring 44 so lange verdreht und in die Aufnahmevertiefung 66 eingeschraubt, bis er mit der Anschlagfläche 59 an der Gegenanschlagfläche 60 zur Anlage gelangt.

Die Schraubverbindung kann bei Bedarf auf beliebige Weise noch gesichert werden, beispielsweise indem vor dem Ineinandereinschrauben ein Klebstoff auf den Gewindegängen appliziert wird.

Nicht dargestellt ist eine alternative Ausführungsform, bei der das Befestigungsgewinde 57 an einem Gewindering ausgebildet ist, der am Lagerring 44 axial fest und zugleich drehbar fixiert ist, so dass die Schraubverbindung durch bloßes Verdrehen des Gewinderinges hergestellt wird und der Lagerring 44 selbst zum Herstellen der Schraubverbindung keine Drehbewegung erfordert.

Das Gegengewinde 58 kann Bestandteil eines bezüglich des Antriebsgehäuses 2 separaten Gewindekörpers sein, der an dem Antriebsgehäuse 2 befestigt ist. Besonders vorteilhaft ist aber auch hier eine einstückige Ausgestaltung von Gegengewinde 58 und Antriebsgehäuse 2. Das Gegengewinde 58 kann insbesondere einstückig an der Seitenwand 68 ausgebildet sein.

Der Lagerring 44 hat eine Längsachse 69, die mit der Drehachse 45 zusammenfällt. Das Zentrum 86 des Lagerringes 44 liegt auf der besagten Längsachse 69.

Eine besonders vorteilhafte Ausgestaltung des Lagerringes 44 ist beim Ausführungsbeispiel realisiert. Hierbei ist vorgesehen, dass der Lagerring 44 über einen das Befestigungsgewinde 57 aufweisenden Gewindeabschnitt 70 und einen sich in Richtung zu der Oberseite 49 axial daran anschließenden, am Au-βenumfang gewindelos ausgebildeten oberen Endabschnitt 71 verfügt. Vorzugsweise sind diese beiden Abschnitte 70, 71 durch eine insbesondere nach Art eines Freistiches gestaltete Ringnut 87 voneinander abgesetzt, die konzentrisch zu der Längsachse 69 am Außenumfang 78 des Lagerringes 44 ausgebildet ist. Es ist zweckmäßig, wenn der gewindelose obere Endabschnitt 71 direkt in die die Oberseite bildende erste axiale Stirnfläche 49 übergeht.

Im am Antriebsgehäuse 2 montierten Zustand taucht der Lagerring 44 zweckmäßigerweise mit dem gesamten Gewindeabschnitt 70 in die Aufnahmevertiefung 66 ein, während der gewindelose obere Endabschnitt 71 vorzugsweise über den die Aufnahmevertiefung 66 umrahmenden Flächenabschnitt der ersten Außenfläche 7 des Antriebsgehäuses 2 vorsteht. Dieser obere Endabschnitt 71 kann daher zur Montage und Demontage des Lagerringes bequem mit einer Hand ergriffen werden.

Zweckmäßig ist es, wenn der Lagerring 44, insbesondere an einer geeigneten und gut zugänglichen Stelle des gewindelosen Endabschnittes 71, mindestens einen Werkzeugansetzabschnitt 88 aufweist, beispielsweise eine Vertiefung, an die sich ein Werkzeug lösbar ansetzen lässt, um in den Lagerring 44 zu Zwecken seines Befestigens oder seines Lösens ein Drehmoment einleiten zu können.

Mindestens ein Werkzeugansetzabschnitt 88 ist zweckmäßigerweise am Außenumfang 78 des Lagerringes 44 vorgesehen.

Beim Ausführungsbeispiel fungiert unmittelbar die Unterseite 50 des Lagerringes 44 als Anschlagfläche 59. Es ist jedoch ohne weiteres möglich, zusätzlich oder alternativ eine Anschlagfläche 59a vorzusehen, die oberhalb des Befestigungsgewindes 57 zwischen der Unterseite 50 und der Oberseite 49 des Lagerringes 44 angeordnet ist. Es besteht hier insbesondere die Möglichkeit, den oberen Endabschnitt 71 mit einem größeren Außendurchmesser als den Gewindeabschnitt 70 auszubilden, so dass sich eine Abstufung ergibt und die dem Gewindeabschnitt 70 zugewandte ringförmige Stirnfläche des oberen Endabschnittes 71 als Anschlagfläche 59a nutzbar ist. Als mit dieser Anschlagfläche 59a kooperierende Gegenanschlagfläche fungiert hier insbesondere derjenige Flächenabschnitt der ersten Außenfläche 7 des Antriebsgehäuses 2, der die Aufnahmevertiefung 66 umrahmt.

Die beim Ausführungsbeispiel mit der Grundfläche 67 der Aufnahmevertiefung 66 kooperierende Anschlagfläche 59 ist zweckmäßigerweise mit axialem Abstand unterhalb des Gewindeabschnittes 70 angeordnet. Hierzu verfügt der Lagerring 44 über einen sich axial nach unten an den Gewindeabschnitt 70 in koaxialer Ausrichtung anschließenden ring- oder hülsenförmigen Anschlagabschnitt 89, dessen Außendurchmesser kleiner ist als derjenige des Gewindeabschnittes 70 und dessen dem Gewindeabschnitt 70 abgewandte Stirnfläche die Anschlagfläche 59 und zugleich auch die untere axiale Stirnfläche 50 des Lagerringes 44 bildet.

Indem der Lagerring 44 ohne zusätzliche Befestigungsschrauben am Antriebsgehäuse 2 fixiert ist, kann sein Ringkörper in radialer Richtung relativ schmal ausgebildet werden, was die Möglichkeit eröffnet, das Antriebsgehäuse 2 mit einer besonders geringen Baubreite auszubilden.

Der Ringkörper des Lagerringes 44 ist in axialer Richtung zweckmäßigerweise nicht durchbrochen. Auf diese Weise verfügt er über eine hohe Stabilität. Außerdem wird auf diese Weise wirksam verhindert, dass flüssige Verunreinigungen von außen her durch den Lagerring 44 hindurch in die Gehäuseausnehmung 52 eintreten.

Bestehen besonders hohe Ansprüche an die Abdichtqualität, kann zwischen dem Außenumfang 78 des Lagerringes 44 und der Seitenwand 68 der Aufnahmevertiefung 66 auch noch ein Dichtungsring zwischengefügt werden.

Um die Abtriebseinheit 38 besonders gut gegen Kippbelastungen abzustützen, kann zusätzlich zu dem Lagerring 44 eine diesbezüglich in Achsrichtung der Drehachse 45 beabstandete weitere Drehlagereinrichtung 84 vorhanden sein, die insbesondere als Wälzlagereinrichtung ausgebildet ist. Eine solche weitere Drehlagereinrichtung 84 ist beim Ausführungsbeispiel vorhanden, wobei sie sich in der Nähe der zweiten Ausnehmungsmündung 54 befindet. Auf diese Weise befindet sich in Achsrichtung der Drehachse 45 auf der einen Seite des Abtriebszahnkranzes 48 der Lagerring 44 und auf der entgegengesetzten Seite die weitere Drehlagereinrichtung 84.

Die Abtriebswelle 47 weist zweckmäßigerweise einen sich auf der dem Abtriebsteller 46 entgegengesetzten Stirnseite an den Abtriebszahnkranz 48 anschließenden Lagerfortsatz 85 auf, der koaxial in die weitere Drehlagereinrichtung 84 eingreift, welche sich am Innenumfang der Gehäuseausnehmung 52 radial abstützt. Wenn die Abtriebsbaugruppe 64 in die Gehäuseausnehmung 52 eingeführt wird, taucht der Lagerfortsatz 85 in die bereits im Antriebsgehäuse 2 vormontierte weitere Drehlagereinrichtung 84 ein.

## Patentansprüche

1. Fluidbetätigte Drehantriebsvorrichtung, mit einem sich längs einer Hauptachse (3) erstreckenden Antriebsgehäuse (2), in dem zwei durch eine Zwischenwand (17) voneinander getrennte längliche Räume (15a, 15b) mit zu der Hauptachse (3) parallelen Längsachsen (16a, 16b) nebeneinander angeordnet sind, von denen mindestens einer einen Antriebsraum bildet, in dem eine durch gesteuerte Fluidbeaufschlagung linear verschiebbare Antriebseinheit (24a, 24b) angeordnet ist, die an ihrer der Zwischenwand (17) zugewandten Längsseite eine Antriebsverzahnung (28) aufweist, und mit einer um eine zu der Hauptachse (3) rechtwinkelige Drehachse (45) relativ zu dem Antriebsgehäuse (2) drehbaren Abtriebseinheit (38), die einen im Innern des Antriebsgehäuses (2) mit der Antriebsverzahnung (28) der mindestens einen Antriebseinheit (24a, 24b) in Verzahnungseingriff stehenden Abtriebszahnkranz (48) aufweist und die an einem sie umschließenden Lagerring (44) drehbar gelagert ist, der mit einer Unterseite (50) voraus im Bereich einer in Achsrichtung der Drehachse (45) orientierten ersten Außenfläche (7) des Antriebsgehäuses (2) montiert und dabei mittels einer Schraubverbindung (51) an dem Antriebsgehäuse (2) befestigt ist, wobei der Lagerring (44) ein bezüglich seines Zentrums (86) konzentrisches Befestigungsgewinde (57) aufweist und an dem Antriebsgehäuse (2) ein zu dem Befestigungsgewinde (57) komplementäres Gegengewinde (58) angeordnet ist, wobei der Lagerring (44) durch Ineinandereinschrauben des Befestigungsgewindes (57) und des Gegengewindes (58) mit dem Antriebsgehäuse (2) verschraubt ist, wobei der Lagerring (44) über einen das Befestigungsgewinde (57) aufweisenden Gewindeabschnitt (70) und über einen sich daran anschließenden, am Außenumfang gewindelosen Endabschnitt (71) verfügt, **dadurch gekennzeichnet, dass** der gewindelose Endabschnitt des Lagerrings (44) ein sich in Richtung zu der der Unterseite (50) des Lagerringes (44) entgegengesetzten Oberseite (49) hin an den Gewindeabschnitt (70) anschließender oberer Endabschnitt (71) ist, der außerhalb einer den Lagerring (44) partiell aufnehmenden Aufnahmevertiefung (66) des Antriebsgehäuses (2) liegt und der über den die Aufnahmevertiefung (66) umrahmenden Flächenabschnitt der ersten Außenfläche (7) des Antriebsgehäuses (2) vorsteht, und dass die Abtriebseinheit (38) und der Lagerring (44) zu einer selbsttragenden Abtriebsbaugruppe (64) zusammengefügt sind, wobei die Abtriebseinheit (38) allein durch den mit dem Antriebsgehäuse (2) verschraubten Lagerring (44) axial unbeweglich bezüglich des Antriebsgehäuses (2) fixiert ist und wobei die Abtriebseinheit (38) einen von dem Lagerring (44) konzentrisch umschlossenen und mit mindestens einer Befestigungsschnittstelle (42) ausgestatteten Abtriebsteller (46) und eine mit dem Abtriebsteller (46) verbundene, den Abtriebszahnkranz (48) tragende Abtriebswelle (47) aufweist.

2. Drehantriebsvorrichtung nach Anspruch 1, **dadurch gekennzeichnet, dass** jeder der beiden länglichen Räume (15a, 15b) einen Antriebsraum bildet, in dem eine durch gesteuerte Fluidbeaufschlagung linear verschiebbare Antriebseinheit (24a, 24b) angeordnet ist, die an ihrer der Zwischenwand (17) zugewandten Längsseite eine Antriebsverzahnung (28) aufweist, wobei beide Antriebseinheiten (24a, 24b) mit dem Abtriebszahnkranz (48) in Verzahnungseingriff stehen.

3. Drehantriebsvorrichtung nach Anspruch 1 oder 2, **dadurch gekennzeichnet, dass** das Befestigungsgewinde (57) einstückig an dem Lagerring (44) ausgebildet ist.

4. Drehantriebsvorrichtung nach einem der Ansprüche 1 bis 3, **dadurch gekennzeichnet, dass** das Gegengewinde (58) einstückig an dem Antriebsgehäuse (2) ausgebildet ist.

5. Drehantriebsvorrichtung nach einem der Ansprüche 1 bis 4, **dadurch gekennzeichnet, dass** das Befestigungsgewinde (57) als Außengewinde und das Gegengewinde (58) als Innengewinde ausgebildet ist.

6. Drehantriebsvorrichtung nach Anspruch 5, **dadurch gekennzeichnet, dass** der Lagerring (44) einen radial nach außen orientierten peripheren Außenumfang (78) hat, wobei das Befestigungsgewinde (57) an diesem peripheren Außenumfang (78) angeordnet ist.

7. Drehantriebsvorrichtung nach einem der Ansprüche 1 bis 6, **dadurch gekennzeichnet, dass** das Gegengewinde (58) am peripheren Innenumfang der Aufnahmevertiefung (66) angeordnet ist.

8. Drehantriebsvorrichtung nach einem der Ansprüche 1 bis 7, **dadurch gekennzeichnet, dass** der Lagerring (44) mindestens eine in Achsrichtung der Drehachse (45) dem Antriebsgehäuse (2) zugewandte und insbesondere ringförmige Anschlagfläche (59, 59a) aufweist, die zur Vorgabe der bezüglich des Antriebsgehäuses (2) eingenommenen Einschraubtiefe des Lagerringes (44) an einer am Antriebsgehäuse (2) angeordneten Gegenanschlagfläche (60) anliegt.

9. Drehantriebsvorrichtung nach Anspruch 8, **dadurch gekennzeichnet, dass** mindestens eine Anschlagfläche (59) an der Unterseite (50) des Lagerringes (44) angeordnet ist, wobei die zugeordnete Gegenanschlagfläche (60) an einer Grundfläche (67) einer den Lagerring (44) zumindest partiell aufnehmenden Aufnahmevertiefung (66) des Antriebsgehäuses (2) ausgebildet ist, und/oder dass mindestens eine Anschlagfläche (59a) oberhalb des Befestigungsgewindes (57) zwischen der Unterseite (50) und der Oberseite (49) des Lagerringes (44) angeordnet ist, wobei die zugeordnete Gegenanschlagfläche von einem Flächenabschnitt der ersten Außenfläche (7) des Antriebsgehäuses (2) gebildet ist, der eine den Lagerring (44) zumindest partiell aufnehmende Aufnahmevertiefung (66) des Antriebsgehäuses (2) umrahmt.

10. Drehantriebsvorrichtung nach einem der Ansprüche 1 bis 9, **dadurch gekennzeichnet, dass** der Lagerring (44) einen das Befestigungsgewinde (57) tragenden Ringkörper aufweist, der durchbrechungslos ausgebildet ist.

11. Drehantriebsvorrichtung nach einem der Ansprüche 1 bis 10, **dadurch gekennzeichnet, dass** konzentrisch zwischen der Abtriebseinheit (38) und dem Lagerring (44) mit sowohl der Abtriebseinheit (38) als auch dem Lagerring (44) kooperierende Lagermittel (62) vorhanden sind, die zweckmäßigerweise eine Mehrzahl von Wälzlagerelementen (63) enthalten.

12. Drehantriebsvorrichtung nach einem der Ansprüche 1 bis 11, **dadurch gekennzeichnet, dass** der Abtriebsteller (46) und die Abtriebswelle (47) einstückig miteinander verbunden sind.

13. Drehantriebsvorrichtung nach einem der Ansprüche 1 bis 12, **dadurch gekennzeichnet, dass** der Abtriebszahnkranz (48) einstückig mit der Abtriebswelle (47) verbunden ist.

14. Drehantriebsvorrichtung nach einem der Ansprüche 1 bis 13, **dadurch gekennzeichnet, dass** jede Antriebseinheit (24a, 24b) zwei axial zueinander beabstandete und abdichtend gleitverschieblich an der Wandung des zugeordneten, als Antriebsraum ausgebildeten länglichen Raumes (15a, 15b) anliegende Kopfabschnitte (25, 26) sowie einen sich zwischen den beiden Kopfabschnitten (25, 26) erstreckenden, die Antriebsverzahnung (28) aufweisenden Zahnstangenabschnitt (27) aufweist.

## Claims

1. Fluid-actuated rotary drive unit with a drive housing (2) extending along a main axis (3) and in which are arranged two adjacent elongated spaces (15a, 15b), separated from one another by a partition wall (17) and with longitudinal axes (16a, 16b) parallel to the main axis (3), at least one of which forms a drive chamber in which is mounted a drive unit (24a, 24b) capable of linear movement through controlled fluidic pressurisation and having a drive gearing (28) on its long side facing the partition wall (17), and with an output unit (38), rotatable relative to the drive housing (2) around a rotation axis (45) at right-angles to the main axis (3), which has an output gear rim (48) in geared engagement inside the drive housing (2) with the drive gearing (28) of the drive unit or units (24a, 24b) and which is rotatably mounted on a bearing ring (44) which encompasses it and which is mounted, with an underside (50) leading, in the area of a first outer surface (7) of the drive housing (2) oriented in the axial direction of the rotation axis (45), and at the same time is fastened to the drive housing (2) by means of a screw connection (51), wherein the bearing ring (44) has a mounting thread (57), concentric to its centre (86), and a mating thread (58) complementary to the mounting thread (57) is provided on the drive housing (2), wherein the bearing ring (44) is screwed to the drive housing (2) by the screwing into one another of the mounting thread (57) and the mating thread (58), wherein the bearing ring (44) has a threaded section (70) with the mounting thread (57) and an adjacent unthreaded end section (71) on the outer periphery, **characterised in that** the unthreaded end section of the bearing ring (44) is an upper end section (71) adjoining the threaded section (70) in the direction of the upper side (49) opposite the underside (50) of the bearing ring (44) and lying outside a locating recess (66) of the drive housing (2) which partially accommodates the bearing ring (44) and extending beyond the surface section of the first outer surface (7) of the drive housing (2) which frames the locating recess (66), and that the output unit (38) and the bearing ring (44) are joined together to form a self-supporting output subassembly (64), wherein the output unit (38) is fixed, axially immovable relative to the drive housing (2), solely by the bearing ring (44) screwed to the drive housing (2), and wherein the output unit (38) has an output disc (46) concentrically encompassed by the bearing ring (44) and equipped with at least one mounting interface (42), and an output shaft (47) connected to the output disc (46) and carrying the output gear rim (48).

2. Rotary drive unit according to claim 1, **characterised in that** each of the two elongated spaces (15a, 15b) forms a drive chamber in which is mounted a drive unit (24a, 24b) capable of linear movement through controlled fluidic pressurisation and having a drive gearing (28) on its long side facing the partition wall (17), wherein both drive units (24a, 24b) are in geared engagement with the output gear rim (48).

3. Rotary drive unit according to claim 1 or 2, **characterised in that** the mounting thread (57) is integral with the bearing ring (44).

4. Rotary drive unit according to any of claims 1 to 3, **characterised in that** the mating thread (58) is integral with the drive housing (2).

5. Rotary drive unit according to any of claims 1 to 4, **characterised in that** the mounting thread (57) is designed as an external thread and the mating thread (58) as an internal thread.

6. Rotary drive unit according to claim 5, **characterised in that** the bearing ring (44) has a radially outwards oriented peripheral outer surface (78), wherein the mounting thread (57) is provided on this peripheral outer surface (78).

7. Rotary drive unit according to any of claims 1 to 6, **characterised in that** the mating thread (58) is provided on the peripheral inner surface of the locating recess (66).

8. Rotary drive unit according to any of claims 1 to 7, **characterised in that** the bearing ring (44) has at least one stop face (59, 59a), facing the drive housing (2) in the axial direction of the rotation axis (45) and in particular annular, which to preset the length of thread engagement of the bearing ring (44) relative to the drive housing (2) fits up against a counter stop face (60) located on the drive housing (2).

9. Rotary drive unit according to claim 8, **characterised in that** the stop face or faces (59) is or are provided on the underside (50) of the bearing ring (44), wherein the assigned counter stop face (60) is formed on a base (67) of a locating recess (66) of the drive housing (2) which at least partly accommodates the bearing ring (44), and/or that at least one stop face (59a) is provided above the mounting thread (57) between the underside (50) and the upper side (49) of the bearing ring (44), wherein the counter stop face if formed by a surface section of the first outer surface (7) of the drive housing (2), which frames a locating recess (66) of the drive housing (2) which at least partly accommodates the bearing ring (44).

10. Rotary drive unit according to any of claims 1 to 9, **characterised in that** the bearing ring (44) has an annular body which carries the mounting thread (57) and is continuous.

11. Rotary drive unit according to any of claims 1 to 10, **characterised in that** bearing means (62) cooperating with both the output unit (38) and the bearing ring (44) are provided concentrically between the output unit (38) and the bearing ring (44), and expediently contain a multiplicity of roller bearing elements (63).

12. Rotary drive unit according to any of claims 1 to 11, **characterised in that** the output disc (46) and the output shaft (47) are joined together in one piece.

13. Rotary drive unit according to any of claims 1 to 12, **characterised in that** the output gear rim (48) is joined integrally to the output shaft (47).

14. Rotary drive unit according to any of claims 1 to 13, **characterised in that** each drive unit (24a, 24b) has two head sections (25, 26) spaced axially apart from one another and in sealing, sliding contact with the wall of the assigned elongated space (15a, 15b) designed as drive chamber, and a gear rack section (27) with the drive gearing (28) extending between the two head sections (25, 26).

## Revendications

1. Dispositif d'entraînement rotatif fluidique, comprenant un boîtier d'entraînement (2) s'étendant le long d'un axe principal (3), dans lequel sont disposés l'un à côté de l'autre deux espaces (15a, 15b) allongés séparés l'un de l'autre par une paroi intermédiaire (17) et présentant des axes longitudinaux (16a, 16b) parallèles par rapport à l'axe principal (3), dont l'un au moins forme un espace d'entraînement, dans lequel est disposée une unité d'entraînement (24a, 24b) pouvant être déplacée de manière linéaire sous l'action commandée d'un fluide et présentant au niveau de son côté longitudinal tourné vers la paroi intermédiaire (17) une denture d'entraînement (28), et comprenant une unité de sortie (38) pouvant être tournée autour d'un axe de rotation (45) perpendiculaire à l'axe principal (3) par rapport au boîtier d'entraînement (2), laquelle unité de sortie présente une couronne dentée de sortie (48) se trouvant en prise d'engrènement à l'intérieur du boîtier d'entraînement (2) avec la denture d'entraînement (28) de l'unité d'entraînement (24a, 24b) au moins au nombre de une et qui est logée de manière à pouvoir tourner au niveau d'une bague de palier (44) l'entourant, laquelle bague de palier est montée par un côté inférieur (50) dans la zone d'une première surface externe (7), orientée dans la direction axiale de l'axe de rotation (45), du boîtier d'entraînement (2) et qui est fixée ce faisant au niveau du boîtier d'entraînement (2) au moyen d'un assemblage vissé (51), sachant que la bague de palier (44) présente un filetage de fixation (57) concentrique par rapport à son centre (86) et qu'un filetage (58) complémentaire par rapport au filetage de fixation (57) est disposé au niveau du boîtier d'entraînement (2), sachant que la bague de palier (44) est vissée au boîtier d'entraînement (2) en vissant l'un dans l'autre le filetage de fixation (57) et le filetage complémentaire (58), sachant que la bague de palier (44) dispose d'une section filetée (70) présentant le filetage de fixation (57) et d'une section d'extrémité (71) sans filetage sur la périphérie externe, se raccordant à ladite section filetée, **caractérisé en ce que** la section d'extrémité sans filetage de la bague de palier (44) est une section d'extrémité (71) supérieure se raccordant à la section filetée (70) en direction du côté supérieur (49) opposé au côté inférieur (50) de la bague de palier (44), laquelle section d'extrémité se trouve en dehors d'une cavité de réception (66), recevant en partie la bague de palier (44), du boîtier d'entraînement (2) et qui fait saillie de la section de surface, encadrant la cavité de réception (66), de la première surface externe (7) du boîtier d'entraînement (2), et **en ce que** l'unité de sortie (38) et la bague de palier (44) sont rassemblées pour former un module de sortie (64) autoporteur, sachant que l'unité de sortie (38) est fixée seulement par la bague de palier (44) vissée au boîtier d'entraînement (2), de manière immobile axialement par rapport au boîtier d'entraînement (2) et sachant que l'unité de sortie (38) présente une assiette de sortie (46) entouré de manière concentrique par la bague de palier (44) et équipé d'au moins une interface de fixation (42), et un arbre de sortie (47) relié à l'assiette d e sortie (46) et supportant la couronne dentée de sortie (48).

2. Dispositif d'entraînement rotatif selon la revendication 1, **caractérisé en ce que** chacun des deux espaces (15a, 15b) allongés forme un espace d'entraînement, dans lequel est disposée une unité d'entraînement (24a, 24b) pouvant être déplacée de manière linéaire sous l'action commandée d'un fluide, laquelle unité d'entraînement présente une denture d'entraînement (28) au niveau de son côté longitudinal tourné vers la paroi intermédiaire (17), sachant que les deux unités d'entraînement (24a, 24b) se trouvent en prise d'engrènement avec la couronne dentée de sortie (48).

3. Dispositif d'entraînement rotatif selon la revendication 1 ou 2, **caractérisé en ce que** le filetage de fixation (57) est réalisé d'un seul tenant au niveau de la bague de palier (44).

4. Dispositif d'entraînement rotatif selon l'une quelconque des revendications 1 à 3, **caractérisé en ce que** le filetage complémentaire (58) est réalisé d'un seul tenant au niveau du boîtier d'entraînement (2).

5. Dispositif d'entraînement rotatif selon l'une quelconque des revendications 1 à 4, **caractérisé en ce que** le filetage de fixation (57) est réalisé sous la forme d'un filetage externe et que le filetage complémentaire (58) est réalisé sous la forme d'un filetage interne.

6. Dispositif d'entraînement rotatif selon la revendication 5, **caractérisé en ce que** la bague de palier (44) comprend une périphérie externe (78) orientée radialement vers l'extérieur, sachant que le filetage de fixation (57) est disposé au niveau de ladite périphérie externe (78).

7. Dispositif d'entraînement rotatif selon l'une quelconque des revendications 1 à 6, **caractérisé en ce que** le filetage complémentaire (58) est disposé au niveau de la périphérie interne de la cavité de réception (66).

8. Dispositif d'entraînement rotatif selon l'une quelconque des revendications 1 à 7, **caractérisé en ce que** la bague de palier (44) présente au moins une surface de butée (59, 59a) tournée vers le boîtier d'entraînement (2) dans la direction axiale de l'axe de rotation (45) et en particulier une surface de butée annulaire, laquelle repose au niveau d'une surface de butée complémentaire (60) disposée au niveau du boîtier d'entraînement (2) afin de spécifier la profondeur de vissage de la bague de palier (44) prise par rapport au boîtier d'entraînement (2).

9. Dispositif d'entraînement rotatif selon la revendication 8, **caractérisé en ce qu'**au moins une surface de butée (59) est disposée au niveau du côté inférieur (50) de la bague de palier (44), sachant que la surface de butée complémentaire (60) associée est réalisée au niveau d'une surface de base (67) d'une cavité de réception (66), recevant au moins en partie la bague de palier (44), du boîtier d'entraînement (2), et/ou **en ce qu'**au moins une surface de butée (59a) est disposée au-dessus du filetage de fixation (57) entre le côté inférieur (50) et le côté supérieur (49) de la bague de palier (44), sachant que la surface de butée complémentaire associée est formée par une section de surface de la première surface externe (7) du boîtier d'entraînement (2), laquelle section de surface encadre une cavité de réception (66) du boîtier d'entraînement (2), recevant au moins en partie la bague de palier (44).

10. Dispositif d'entraînement rotatif selon l'une quelconque des revendications 1 à 9, **caractérisé en ce que** la bague de palier (44) présente un corps annulaire supportant le filetage de fixation (57), lequel est réalisé en continu.

11. Dispositif d'entraînement rotatif selon l'une quelconque des revendications 1 à 10, **caractérisé en ce que** sont présents de manière concentrique entre l'unité de sortie (38) et la bague de palier (44) des moyens de support (62) coopérant aussi bien avec l'unité de sortie (38) qu'avec la bague de palier (44), lesquels comprennent de manière appropriée une pluralité d'éléments de palier à roulement (63).

12. Dispositif d'entraînement rotatif selon l'une quelconque des revendications 1 à 11, **caractérisé en ce que** l'assiette de sortie (46) et l'arbre de sortie (47) sont reliés l'un à l'autre d'un seul tenant.

13. Dispositif d'entraînement rotatif selon l'une quelconque des revendications 1 à 12, **caractérisé en ce que** la couronne dentée de sortie (48) est reliée d'un seul tenant à l'arbre de sortie (47).

14. Dispositif d'entraînement rotatif selon l'une quelconque des revendications 1 à 13, **caractérisé en ce que** chaque, unité d'entraînement (24a, 24b) présente deux sections de tête (25, 26) espacées axialement l'une de l'autre et reposant de manière étanche et de manière à pouvoir se déplacer par glissement au niveau de la paroi de l'espace (15a, 15b) allongé associé et se présentant sous la forme d'un espace d'entraînement et une section de crémaillère (27) présentant la denture d'entraînement (28) et s'étendant entre les deux sections de tête (25, 26).
